# EUROPEAN PATENT APPLICATION

(11) **EP 4 302 606 A1**
(43) Date of publication of application: **10.01.2024**
(21) Application number: 22382646.2
(22) Date of filing: 06.07.2022
(51) Int. Cl.: A23B 4/07, A23L 3/365

(54) **SYSTEM FOR DEFROSTING FROZEN FOOD**

(71) Applicant: Conservas Rianxeira, S.A.U., 15938 Boiro (A Coruña) (ES)
(72) Inventor:
(74) Representative: Isern Patentes y Marcas S.L.

(57) **Abstract**

The system comprises: a tank (2) with heat exchange fluid to contain frozen food; a recirculation system (3) to recirculate the fluid medium to and from the tank (2), and comprising a heat exchanger (31) external to the tank (2); movement means (1) to move the frozen food through the tank (2); input means to continuously feed each tank (2) with frozen fish; and control means (4) to control the movement means (1), the recirculation system (3) and the input means (5). It enables continuous operation, as well as adapting the operating conditions to production needs, with optimized energy consumption.

## Description

### OBJECT OF THE INVENTION

The present invention falls within the technical field of food defrosting. More specifically, the object of the invention is a system for defrosting frozen food, incorporating notable innovations and advantages over the techniques used up to now, since it allows effective defrosting of frozen fish in a homogeneous and continuous manner and with optimized energy consumption.

### BACKGROUND OF THE INVENTION

The abundant use and preservation of frozen food, due to its obvious advantages of property preservation, for example in the case of fish, is known in the current state of the art. However, the use of such frozen foods also implies the clear need to defrost such foods prior to consumption. One option is to defrost the food by exposure to room temperature, although this means too long an exposure time. In the event that said defrosting must be accelerated, this can sometimes become difficult, especially when it is difficult to control its intervening variables, meaning, for example, that the frozen food is not defrosted in a suitably homogeneous or suitably energy-optimised manner.

### DESCRIPTION OF THE INVENTION

The present invention has been developed to provide a system for defrosting frozen food, in particular frozen fish, according to the main claim. Other preferred advantageous features are described in the dependent claims. The system of the invention enables continuous operation, as well as adapting the operating conditions to production needs. Additionally, and with the present invention, frozen food is effectively defrosted in a homogeneous and continuous manner, and with optimized energy consumption.

### BRIEF DESCRIPTION OF THE DRAWINGS

Other features and advantages of the invention will become apparent from the description of a preferred but not exclusive embodiment, illustrated by way of nonlimiting example in the attached drawings, wherein:
Figure 1 is a partial schematic view of the system of the invention.
Figure 2 is a detailed perspective of the input means.
Figure 3 is a detailed perspective of the movement means.
Figure 4 is a schematic representation of the installation of Figures 1-3.

### DESCRIPTION OF A PREFERRED EMBODIMENT

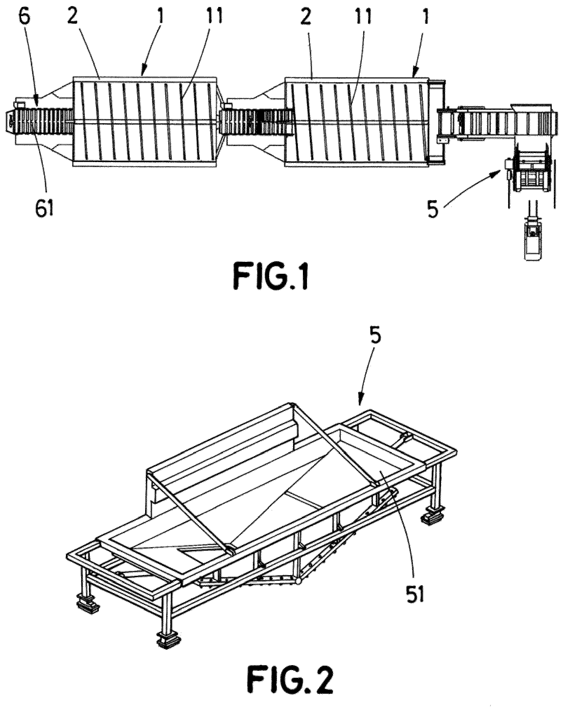

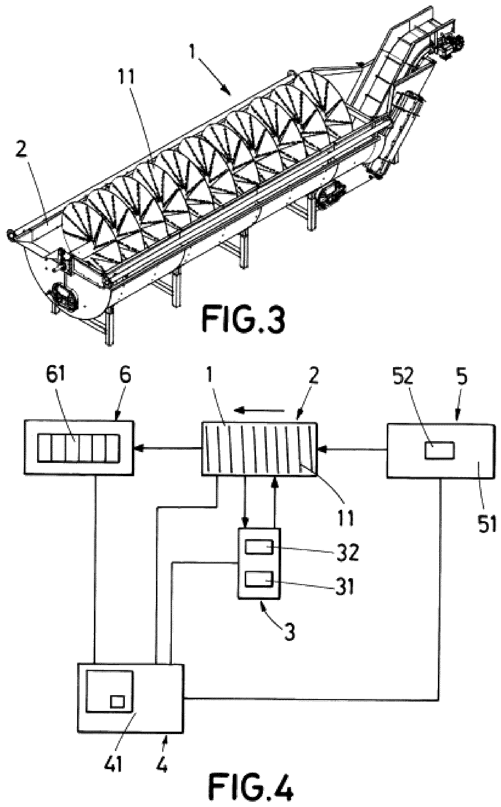

With the aid of Figures 1-4 attached, a system for defrosting frozen food according to the present invention is described below.

The system for defrosting frozen food of the invention comprises a movement means 1, a tank 2 with a fluid heat exchange medium, and a recirculation system 3 of said fluid medium in the tank 2.

In a preferred embodiment of the defrosting system of the invention, the frozen food is frozen fish; specifically, frozen tuna.

The movement means 1 is arranged in the tank 2 in a horizontal arrangement. As can be seen in Figure 1, the movement means 1 can include an endless screw 11 that rotates about its own axial axis.

The movement means 1 is used to move the fish along the tank 2, keeping the fish covered by, and in contact with, the fluid medium contained in the tank 2. In the specific case of the endless screw 11, the movement occurs along the direction of the axial axis, as a result of the rotary movement of the movement means 1 about said axial axis.

In the preferred embodiment shown in the figures, the tank 2 has an uncovered arrangement, the fluid medium being a liquid, such as water. Also, preferably, the tank 2 can have a half-cylinder configuration.

This contact of the water with the frozen fish entails progressive defrosting of the frozen fish during its movement along the tank 2, due to a transfer of heat from the water circulating through the tank 2 to the frozen fish.

As can be seen in the figures, the defrosting system of the invention can include a plurality of tanks 2 arranged in series, each with its corresponding movement means 1, wherein the figures show two consecutive tanks 2 that each include a movement means 1 of the endless screw type 11.

The defrosting system also comprises a recirculation system 3 enabled to maintain water inlet and outlet in the tank 2. The same recirculation system 3 is at the same time enabled for heat exchange outside of the tank 2 in said circulating water, since it comprises a heat exchanger 31 external to the tank 2. This means that the heat transferred from the water to the frozen fish as a result of their contact inside the tank 2 can be recovered from outside the same tank 2, and, therefore, the circulating water in the tank 2 is kept at a suitable temperature, and the system for defrosting frozen food of the invention can operate without issue in continuous mode.

In other preferred embodiments of the system for defrosting frozen food of the present invention, the tank 2 can have a closed arrangement, and even the fluid medium can be of a gaseous nature, the recirculation system 3 being enabled for this purpose to operate with a gaseous fluid medium.

Moreover, the system for defrosting frozen food of the invention incorporates control means 4, which are linked in data communication and have the capacity to regulate the movement means 1 and the recirculation system 3. The same control means 4 incorporate a user interface 41, enabled to display and enter data on control variables and operation of the defrosting system of the invention.

The control means 4 control the forward speed of the fish along the tank 2. In the particular case of movement means 1 with an endless screw 11, the control means 4 control the rotation of the endless screw 11. Likewise, the control means 4 control the water inlet and outlet flow rate in the tank 2 and a reading of the temperature of the inlet and outlet water from the recirculation system 3.

In accordance with the foregoing, control of the forward speed and of the water inlet and outlet flow rate and temperature in the tank 2 from the recirculation system 3 is performed, which makes it possible to optimize the result and energy consumption when defrosting the frozen fish in the system for defrosting frozen food of the invention.

Moreover, in the system for defrosting frozen food of the proposed invention, the recirculation system 3 comprises filtering means 32 to retain and filter solid particles present in the fluid medium, such as water, and that have been detached from the same frozen fish during its movement by the movement means 1 in the tank 2 in the contact between said fluid medium and the introduced frozen fish.

Additionally, the defrosting system of the invention incorporates input means 5 to continuously feed the tank 2 and the movement means 1 with frozen fish. The combination of the movement means 1 and the input means 5 allows continuous defrosting, without the need to operate in batches. The presence of the control means 4 allows, moreover, the production of defrosted fish to be optimized by adapting the operating parameters (temperature of the fluid medium, flow rate of the fluid medium, speed of movement, etc.) to the production parameters (quantity of fish, temperature of the fish, etc.).

The input means 5 for the input of the frozen fish are configured as a hopper 51 and also incorporate weighing means 52 for weighing the frozen fish that is introduced into the movement means 1 and the tank 2.

The control means 4 are also linked in data communication and have the capacity to regulate the said input means 5.

This allows the control means 4 to also perform proper dosing of the frozen fish introduced into the movement means 1 and the tank 2, according to the weight of the same frozen fish recorded by the weighing means 52 and the record and control of the data on the rotation speed of the endless screw 11 of the movement means 1 and on the resulting movement speed of the frozen fish introduced into the tank 2, as well as the flow rate and temperature of the inlet and outlet water in the recirculation system 3, to thus optimize the result and energy consumption when defrosting the frozen product.

Additionally, the system for defrosting frozen food of the present invention incorporates output means 6 for the output of defrosted fish from the movement means 1 and from the tank 2. In this preferred embodiment, the output means 6 incorporate a conveyor belt 61.

The control means 4 are also linked in data communication and have the capacity to regulate the output means 6.

The details, shapes, dimensions and other accessory elements, as well as the materials used in the manufacture of the system for defrosting frozen food of the invention, may be suitably replaced by others that are technically equivalent.

### List of elements

- 1: Movement means
- 11: Endless screw of 1
- 2: Tank
- 3: Recirculation system
- 31: Heat exchanger
- 32: Filtering means
- 4: Control means
- 41: Interface of 4
- 5: Input means
- 51: Hopper
- 52: Weighing means
- 6: Output means
- 61: Conveyor belt

## Claims

1. A system for defrosting frozen food, **characterized in that** it comprises:
- at least one tank (2) to contain frozen food in contact with a fluid heat exchange medium;
- a recirculation system (3), to recirculate the fluid medium, introducing and removing the fluid medium in the tank (2), and comprising a heat exchanger external to the tank (2);
- a movement means (1), in each tank (2), to move the frozen food along the tank (2);
- input means to continuously feed each tank (2) with frozen fish; and
- control means (4) linked in data communication and having the capacity to regulate the movement means (1), the recirculation system (3) and the input means (5).

2. The system for defrosting frozen food according to claim 1, wherein the movement means (1) has a horizontal arrangement.

3. The system for defrosting frozen food according to any of claims 1-2, wherein the movement means (1) is helical-shaped with an endless screw (11).

4. The system for defrosting frozen food according to any of claims 1-3, which additionally incorporates input means (5) for the input of frozen food in the tank (2), the input means comprising weighing means (52) to weigh the frozen food.

5. The system for defrosting frozen food according to claim 4, wherein the input means (5) comprise a hopper (51) that houses the weighing means (52).

6. The system for defrosting frozen food according to any of claims 4-5, wherein the control means (4) are linked in data communication and have the capacity to regulate the input means (5).

7. The system for defrosting frozen food according to any of claims 1-6, wherein the recirculation system (3) additionally comprises filtering means to filter solid particles detached from the fish in the fluid medium.

8. The system for defrosting frozen food according to any of claims 1-7, wherein the tank (2) is open.

9. The system for defrosting frozen food according to any of claims 1-7, wherein the tank (2) is closed.

10. The system for defrosting frozen food according to any of claims 1-9, wherein the fluid medium is liquid.

11. The system for defrosting frozen food according to claim 10, wherein the fluid medium is water.

12. The system for defrosting frozen food according to claim 9, wherein the fluid medium is of a gaseous nature.

13. The system for defrosting frozen food according to any of claims 1-12, wherein the control means (4) incorporate a user interface (41).
